(19) Europäisches Patentamt
European Patent Office
Office européen des brevets

(11) EP 4 685 604 A1

(12) **EUROPÄISCHE PATENTANMELDUNG**

(43) Veröffentlichungstag:
28.01.2026 Patentblatt 2026/05

(21) Anmeldenummer: 25187708.0

(22) Anmeldetag: 07.07.2025

(51) Internationale Patentklassifikation (IPC):
G05D 1/87 (2024.01)   G05D 1/85 (2024.01)
G05B 9/03 (2006.01)   H02P 7/00 (2016.01)

(52) Gemeinsame Patentklassifikation (CPC):
G05D 1/87; B64C 13/503; G05B 9/03; G05D 1/857;
H02P 6/17; H02P 29/028; G05D 2109/20

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH LA MA MD TN

(30) Priorität: 26.07.2024 DE 102024121393

(71) Anmelder: Liebherr-Aerospace Lindenberg
GmbH
88161 Lindenberg (DE)

(72) Erfinder:
• IMMLER, Thomas
88138 Sigmarszell (DE)
• KRONBURGER, Frank
88161 Lindenberg (DE)

(74) Vertreter: Lorenz Seidler Gossel Part. mbB
Widenmayerstr. 23
80538 München (DE)

(54) **AKTUATOR MIT REDUNDANTEN KANÄLEN**

(57)  Die Erfindung betrifft einen Aktuator mit redundanten Kanälen, der einen Motor zum Betätigen des Aktuators, einen Sensor, insbesondere einen Drehzahlsensor, zum Erfassen und Weitergeben eines Drehzahlsignals des Motors, einen ersten Kanal, der eine mit dem Sensor verbundene erste Funktionseinheit zum Betreiben des Aktuators aufweist, einen zum ersten Kanal redundanten zweiten Kanal, der eine mit dem Sensor verbundene zweite Funktionseinheit zum Betreiben des Aktuators aufweist, und eine Auswahleinheit zum Auswählen, ob der erste Kanal oder der zweite Kanal die Kontrolle über den Aktuator erhält, umfasst, wobei der erste Kanal einen auf dem Drehzahlsignal basierenden ersten Drehzahlinformationswert und der zweite Kanal einen auf dem Drehzahlsignal basierenden zweiten Drehzahlinformationswert an die Auswahleinheit liefert. Der Aktuator ist gekennzeichnet durch eine Motorinformationseinheit zum Bereitstellen eines Motorinformationswerts, insbesondere eines dritten Drehzahlinformationswerts des Motors, an die Auswahleinheit, wobei die Auswahleinheit dazu ausgelegt ist, auf Grundlage des Motorinformationswerts sowie des ersten und des zweiten Drehzahlinformationswerts eine Entscheidung zu treffen, ob der erste Kanal oder der zweite Kanal die Kontrolle über den Aktuator erhält.

Fig. 1

**Beschreibung**

Die vorliegende Erfindung betrifft einen Aktuator mit redundanten Kanälen sowie ein Luftfahrzeug mit einem solchen Aktuator.

Aktuatoren sind zentrale Komponenten in zahlreichen technischen Systemen, die mechanische Bewegungen durch elektrische Signale ausführen. Ihre Zuverlässigkeit und Präzision sind in vielen Anwendungen entscheidend, insbesondere in sicherheitskritischen Bereichen wie der Luftfahrt. Ein bekannter Ansatz zur Erhöhung der Zuverlässigkeit von Aktuatoren ist die redundante Implementierung wichtiger Komponenten des Aktuators. Diese Technologie ermöglicht es, Ausfälle einzelner Komponenten zu kompensieren und somit die Gesamtfunktionalität des Systems auch bei Ausfall von Aktuatorkomponenten aufrechtzuerhalten.

In der Luftfahrt sind solche Aktuatoren von besonderer Bedeutung. Moderne Luftfahrzeuge, einschließlich eVTOLs (elektrische vertikale Start- und Landefahrzeuge) und UAVs (unbemannte Luftfahrzeuge), profitieren erheblich von dieser Technologie. Hierbei stellen redundante Aktuatoren sicher, dass die Steuerung und Stabilität des Flugzeugs auch im Falle eines Fehlers in einem der redundant ausgeführten Signalkanäle gewährleistet bleibt. Dies ist besonders wichtig für die Flugsicherheit und die Zuverlässigkeit der Systeme, die unter extremen Bedingungen arbeiten müssen und bei denen ein Ausfall eines Aktuators erhebliche Auswirkungen auf die Sicherheit und die Betriebsfähigkeit des Luftfahrzeugs hätte.

Daneben finden Aktuatoren aber auch in anderen Bereichen Anwendung wie beispielsweise in der Industrieautomation, etwa in der Robotertechnik, wo sie präzise und zuverlässige Bewegungen von Maschinen und Robotern gewährleisten, selbst wenn einzelne Komponenten ausfallen. Auch im Automobilsektor, insbesondere bei Fahrzeugen mit autonomer Fahrfähigkeit, sind solche Aktuatoren in der Regel unverzichtbar, um die Sicherheit und Zuverlässigkeit der Fahrzeugsysteme zu erhöhen.

Um nach dem Stand der Technik entsprechend sichere Aktuatoren und damit umgesetzte Steuerungssysteme vorzusehen, wird oftmals auf eine sogenannte Triplex-Architektur bzw. eine CON/MON-Architektur ("Control/Monitor-Architektur") mit übergeordnetem Steuerrechner zurückgegriffen, wobei diese aus dem Stand der Technik bekannten Umsetzungen nachteilbehaftet sind.

So gibt es in der Triplex-Architektur einen Control-Kanal, der die Steuerung übernimmt, während zwei weitere Kanäle die Ausführung überwachen. Diese Kanäle berechnen und vergleichen die gleichen Aufgaben, um bei Abweichungen durch ein Voting-System festzustellen, welcher der mehreren Kanäle berücksichtigt werden soll, d.h. welchem der Kanäle die Kontrolle über den Aktuator zugewiesen wird. Der Hauptnachteil dieser Architektur liegt in der Notwendigkeit, drei vollwertige und möglicherweise dissimilare Kanäle zu betreiben, was die Kosten und die Komplexität erheblich erhöht.

Bei der CON/MON-Architektur mit übergeordnetem Steuerrechner übernimmt ein Control-Kanal die Steuerung, während ein Monitor-Kanal die gleichen Aufgaben berechnet und überwacht. Der Kontroll-Kanal wie auch der Monitor-Kanal sind dabei redundant zueinander ausgebildet und können identische Aufgaben übernehmen. Bei Feststellung einer Diskrepanz ist ein übergeordneter Rechner, beispielsweise ein Flight Control Computer, FCC, erforderlich, um zu entscheiden, ob der Aktuator weiter betrieben werden kann oder ob ein anderer Aktuator übernehmen soll. Diese Architektur hat den Nachteil, dass die Regelung aufgrund der Kommunikation zwischen Aktuatorelektronik und dem übergeordneten Rechner langsam ist. Zudem ist die Taktfrequenz des übergeordneten Rechners in der Regel deutlich niedriger als die der Aktuatorelektronik, sodass es zu einem relativ späten Einschreiten des übergeordneten Steuerrechners kommt, was insbesondere bei von dem Aktuator beeinflussten Fahr- oder Flugmanövern nachteilhaft ist.

Es ist das Ziel der vorliegenden Erfindung einen gegenüber dem Stand der Technik verbesserten Aktuator, der eine einfache und dennoch robuste Steuerungsarchitektur besitzt, die speziell für kritische Anwendungen genutzt werden kann, vorzusehen. Der erfindungsgemäße Aktuator soll dabei die oben aufgeführten Nachteile überwinden oder zumindest abmildern.

Dies gelingt mit einem Aktuator, der sämtliche Merkmale des Anspruchs 1 aufweist. Vorteilhafte Modifikationen des erfindungsgemäßen Aktuators sind dabei in den abhängigen Ansprüchen niedergeschrieben.

Der erfindungsgemäße Aktuator mit redundanten Kanälen umfasst einen Motor zum Betätigen des Aktuators, einen Sensor, insbesondere einen Drehzahlsensor, zum Erfassen und Weitergeben eines Drehzahlsignals des Motors, einen ersten Kanal, der eine mit dem Sensor verbundene erste Funktionseinheit zum Betreiben des Aktuators aufweist, einen zum ersten Kanal redundanten zweiten Kanal, der eine mit dem Sensor verbundene zweite Funktionseinheit zum Betreiben des Aktuators aufweist, und eine Auswahleinheit zum Auswählen, ob der erste Kanal oder der zweite Kanal die Kontrolle über den Aktuator erhält, wobei der erste Kanal einen auf dem Drehzahlsignal basierenden ersten Drehzahlinformationswert und der zweite Kanal einen auf dem Drehzahlsignal basierenden zweiten Drehzahlinformationswert an die Auswahleinheit liefert. Der Aktuator ist gekennzeichnet durch eine Motorinformationseinheit zum Bereitstellen eines Motorinformationswerts, insbesondere eines dritten Drehzahlinformationswerts des Motors, an die Auswahleinheit, wobei die Auswahleinheit dazu ausgelegt ist, auf Grundlage des Motorinformationswerts sowie des ersten und des zweiten Drehzahlinformationswerts eine Entscheidung zu treffen, ob der erste Kanal oder der zweite Kanal die Kontrolle über den Aktuator erhält.

Anders als nach dem Stand der Technik wird nach der vorliegenden Erfindung kein übergeordneter Steuerrechner benötigt, sondern es wird mithilfe der Motorinformationseinheit ein Motorinformationswert generiert, sodass die Auswahleinheit auf Grundlage des ersten Drehzahlinformationswerts (generiert durch den ersten Kanal), des zweiten Drehzahlinformationswerts (generiert durch den zweiten Kanal) und des Motorinformationswerts eine Entscheidung darüber treffen kann, ob der erste Kanal oder der zweite Kanal fehlerhaft agiert. Abhängig von der Entscheidung wird dann auf den als nicht fehlerhaft angesehenen Kanal bei der Steuerung des Aktuators zurückgegriffen, wohingegen der als fehlerhaft angesehene Kanal vom Motor isoliert werden kann.

Als Sensor zum Erfassen und Weitergeben eines Drehzahlsignals des Motors kommt bspw. ein Drehzahlsensor oder ein Positionssensor des Motors infrage. Auch mithilfe eines Positionssensors des Motors ist es möglich, die Drehzahl des Motors abzuleiten. Im Folgenden wird der Einfachheit halber von Drehzahlsensor gesprochen, wobei, wie vorstehend erläutert, hier auch ein Positionssensor des Motors gemeint sein kann.

Es wird also kein vollwertiger dritter redundanter Kanal verwendet, sondern es wird nur eine zusätzliche Information über den Zustand des Motors des Aktuators der Auswahleinheit bekannt gemacht. Die Motorinformationseinheit ist dabei unterschiedlich zu dem Drehzahlsensor, der mit seinem erfassten Drehzahlsignal die Grundlage für den ersten und den zweiten Drehzahlinformationswert liefert.

Dadurch wird die typische Problematik der aus dem Stand der Technik bekannten CON/MON-Architektur überwunden, die bei einer Detektion eines fehlerhaften Kanals nicht weiß, welcher der beiden Kanäle fehlerhaft ist und welcher der beiden Kanäle richtige Ergebnisse liefert. Dies hat zur Folge, dass nicht entschieden werden kann, welcher der beiden Kanäle für die Steuerung des Aktuators zu benutzen ist, sodass bei einem detektierten Fehlerfall aus Sicherheitsgründen der gesamte Aktuator oftmals zu deaktivieren ist.

Mit der vorliegenden Erfindung ist es nun möglich einen Abgleich des über den ersten Kanal erhaltenen ersten Drehzahlinformationswerts sowohl mit dem zweiten Drehzahlinformationswert wie auch dem Motorinformationswert vorzunehmen, sodass dann über eine Mehrheitsentscheidung in Erfahrung gebracht werden kann, ob der erste Kanal oder der zweite Kanal oder die Motorinformationseinheit fehlerhaft agiert.

Im Gegensatz zur Triplex-Architektur ist nach der Erfindung kein dritter vollwertiger Kanal notwendig, so dass sich Einsparungen in Bezug auf Kosten und Gewicht realisieren lassen.

Nach einer vorteilhaften Modifikation der vorliegenden Erfindung kann vorgesehen sein, dass die erste Funktionseinheit und die zweite Funktionseinheit jeweils dazu ausgelegt sind, aus dem Drehzahlsignal des Drehzahlsensors die Drehzahlinformation zu bestimmen und/oder jeweils eine Kommunikationseinheit umfassen, um mit einer übergeordneten Steuereinheit kommunizieren zu können.

Dabei kann insbesondere vorgesehen sein, dass die erste und auch die zweite Funktionseinheit jeweils durch einen Mikrocontroller oder einen FPGA umgesetzt ist, um aus dem Signal des Drehzahlsensors ein Drehzahlsignal zu berechnen.

Das Vorsehen einer jeweiligen Kommunikationseinheit, die dazu dient mit einer übergeordneten Steuereinheit zu kommunizieren, dann bspw. dazu genutzt werden, einen Fehlerzustand zu melden.

Nach einer optionalen Modifikation der vorliegenden Erfindung kann vorgesehen sein, dass der erste Drehzahlinformationswert und der zweite Drehzahlinformationswert des Motors eine Drehzahl des Motors, insbesondere eine Solldrehzahl und/oder eine Istdrehzahl des Motors, ist.

Ferner kann dabei vorgesehen sein, dass der Motorinformationswert der Motorinformationseinheit eine Drehzahl des Motors, insbesondere eine Solldrehzahl und/oder eine Istdrehzahl des Motors, oder die Motorposition des Motors ist.

Ist der Motorinformationswert ebenfalls eine Drehzahl des Motors, wobei die so bestimmte Drehzahl des Motors nicht auf den Drehzahlsensor zurückgeht, die das Drehzahlsignal an die erste Funktionseinheit und die zweite Funktionseinheit übermittelt, kann in einem Fehlerfall des ersten Kanals oder des zweiten Kanals mittels Mehrheitsentscheidung durch die Auswahleinheit bestimmt werden, welcher Kanal als fehlerhaft angesehen wird.

Hierzu kann beispielsweise eine Differenz des ersten Drehzahlinformationswerts gegenüber dem Motorinformationswert genutzt werden, um zu überprüfen, ob eine Abweichung vorliegt. Gleichzeitig kann überprüft werden, ob der zweite Drehzahlinformationswert eine Abweichung von dem Motorinformationswert besitzt und ob der erste Drehzahlinformationswert sich von dem zweiten Drehzahlinformationswert unterscheidet.

Wird dann festgestellt, dass sich der erste Drehzahlinformationswert von dem Motorinformationswert unterscheidet, der zweite Drehzahlinformationswert aber gleich ist zu dem Motorinformationswert und die beiden Drehzahlinformationswerte zueinander verschieden sind, kann bspw. darauf geschlossen werden, dass die erste Drehzahlinformationswert fehlerhaft ist. Die Kontrolle über den Aktuator wird dann nicht über den ersten Kanal, sondern über den zweiten Kanal ausgeführt, da der erste Kanal den fehlerhaften ersten Drehzahlinformationswert an die Auswahleinheit übermittelt hat. Von daher wird davon ausgegangen, dass der erste Kanal fehlerhaft ist.

In ähnlicher Weise kann für jeden der drei Werte bestimmt werden, ob dieser gegenüber den anderen zwei zu vergleichenden Werten als fehlerhaft anzusehen ist. Man kann demnach auf einen fehlerhaften ersten Kanal, einen fehlerhaften zweiten Kanal oder eine fehlerhafte Motorinformationseinheit schließen.

Wird auf eine fehlerhafte Motorinformationseinheit geschlossen, kann die Auswahleinheit dazu ausgelegt sein, den Kanal die Kontrolle über den Aktuator zu überlassen, der ihn bereits innehatte.

Nach einer vorteilhaften Fortbildung der vorliegenden Erfindung kann vorgesehen sein, dass der Drehzahlsensor in einfacher Ausführung, also simplex, vorgesehen ist und das Drehzahlsignal an den ersten Kanal und den zweiten Kanal liefert.

Der Drehzahlsensor zum Abgeben des Drehzahlsignals an die erste Funktionseinheit und die zweite Funktionseinheit ist daher nicht redundant ausgebildet. Die Motorinformationseinheit, die ebenfalls einen Drehzahlinformationswert an die Auswerteeinheit liefern kann, nutzt einen unterschiedlichen Ansatzpunkt am Motor, um die entsprechende Information zu generieren (bspw. über einen Abgriff der Motorsteuerspannung, um einen Rückschluss auf die Drehzahl des Motors zu erhalten).

Nach einer weiteren Fortbildung der vorliegenden Erfindung kann vorgesehen sein, dass der Motor ein Gleichstrommotor, insbesondere ein bürstenloser Gleichstrommotor ist.

Nach einer optionalen Fortbildung der vorliegenden Erfindung kann vorgesehen sein, dass die Auswahleinheit dazu ausgelegt ist, einen der beiden Kanäle auszuwählen, um den Motor anzusteuern, und den anderen der beiden Kanäle zu nutzen, um ein Ansteuern des Motors durch den ersten Kanal zu überwachen.

Dabei kann vorgesehen sein, dass der erste Kanal und der zweite Kanal dazu ausgebildet sind jeweils eine Steuerung des Motors des Aktuators zu übernehmen, vorzugsweise wobei der erste Kanal und der zweite Kanal in ihrem Aufbau identisch zueinander sind. Der nicht mit der Kontrolle des Aktuators betraute Kanal erhält dieselbe Signalisierung wie der andere Kanal und verarbeitet diese auch so, als wäre er mit der Steuerung betraut, um mit Hilfe der Auswahleinheit eine Überprüfung zu ermöglichen, ob die an den Motor gelieferten Ansteuersignale des aktiven Kanals mit den (zu verwerfenden) Ansteuersignalen des inaktiven Kanals übereinstimmen.

Nach einer vorteilhaften Umsetzung der vorliegenden Erfindung kann vorgesehen sein, dass die Auswahleinheit nicht durch einen FPGA oder einen Mikrocontroller, sondern nur durch Logikbausteine und/oder entsprechende einfache Hardware umgesetzt ist.

Dadurch wird sichergestellt, dass eine schnelle Reaktion zum Erkennen eines fehlerhaften Kanals und auch ein eventuelles Umschalten der Kontrolle von einem Kanal auf den anderen Kanal erfolgt, ohne dass zunächst eine übergeordnete Recheneinheit kontaktiert werden muss.

Nach einer weiteren optionalen Fortbildung der vorliegenden Erfindung kann vorgesehen sein, dass die Motorinformationseinheit dazu ausgelegt ist, über eine Motorspannung, insbesondere eine Spannung an einem Ausgang einer Endstufe des Motors, und/oder einen Motorstrom einen dritten Drehzahlinformationswert des Motors zu bestimmen.

Indem man also eine Information über die Drehzahl des Motors über einen alternativen Weg, der sich zum Drehzahlsensor unterscheidet, an die Auswahleinheit weiterleitet, kann dort eine Entscheidung über die Fehlerhaftigkeit des ersten Kanals oder des zweiten Kanals getroffen werden.

Vorteilhafterweise kann hierbei vorgesehen sein, dass die Motorinformationseinheit eine Konvertereinheit zum Umwandeln einer Motorspannung in den dritten Drehzahlinformationswert des Motors ist.

Hierbei kann auf die nachfolgende Formel zurückgegriffen werden:

$$n = \frac{V - I \cdot R}{k_e}$$

,

wobei $n$ die Drehzahl, $V$ die angelegte Spannung, $I$ der Strom, $R$ der Widerstand der Ankerwicklung und $k_e$ die elektrische Konstante des Motors ist.

Unter der Annahme eines stationären Stroms (und der sich hieraus ergebenden Vernachlässigung der Induktivität des Motors) gilt dann für die Spannung:

$$V = I \cdot R + k_e \cdot n$$

Soll hingegen auch die Induktivität L der Wicklungen berücksichtigt werden, muss hierbei auch die Änderung des Stroms über die Zeit beachtet werden, sodass sich die obige Formel wie folgt ändert:

$$V = I \cdot R + k_e \cdot n + L \cdot \frac{dI}{dt}$$

Dem Fachmann ist klar, dass für die Zwecke der vorliegenden Erfindung sowohl die vereinfachte Formel ohne Berücksichtigung des Stroms wie auch die vollständigere Formel nutzen lassen.

Ferner kann nach einer optionalen Modifikation der vorliegenden Erfindung vorgesehen sein, dass die Motorinformationseinheit dazu ausgelegt ist, einen dritten Drehzahlinformationswert über eine offene Phasenwindung des Motors, insbesondere eines bürstenlosen Gleichstrommotors, zu bestimmen.

Dies stellt einen alternativen bzw. zusätzlichen Weg zum Erhalt eines dritten Drehzahlinformationswerts dar, der der Auswahleinheit zugeführt wird.

Nach einer weiteren optionalen Fortbildung der vorliegenden Erfindung kann vorgesehen sein, dass die Motorinformationseinheit dazu ausgelegt ist, den dritten Drehzahlinformationswert mittels einer in den Motor eingelegten Hilfswicklung zu bestimmen.

Auch das Vorsehen einer Hilfswicklung zum Ermitteln eines dritten Drehzahlinformationswerts, der unabhängig von dem Drehzahlsensor ist, kann nach der Erfindung erfolgen.

Darüber hinaus kann nach der vorliegenden Erfindung vorgesehen sein, dass die Motorinformationseinheit dazu ausgelegt ist, durch einen weiteren an den Motor angebrachten Drehzahlsensor den dritten Drehzahlinformationswert zu bestimmen.

Nach einer weiteren optionalen Fortbildung der vorliegenden Erfindung kann vorgesehen sein, dass die Motorinformationseinheit dazu ausgelegt ist, eine Motorposition des Motors an die Auswahleinheit zu liefern, und die Auswahleinheit dazu ausgelegt ist, auf Grundlage der erhaltenen Motorposition, einen Fehler in dem Drehzahlsensor, der das Drehzahlsignal sowohl an den ersten Kanal als auch an den zweiten Kanal gibt, zu erkennen.

Hierbei wird nun anstelle von Drehzahlen die Motorposition verglichen, sodass auch ein Fehler des vom ersten und zweiten Kanal gemeinsam genutzten Sensors sowie des Motors erfasst werden kann.

Nach einer vorteilhaften Fortbildung der vorliegenden Erfindung kann vorgesehen sein, dass die Auswahleinheit dazu ausgelegt ist, den Motorinformationswert sowie den ersten und den zweiten Drehzahlinformationswert untereinander zu vergleichen und in Abhängigkeit davon auf einen fehlerhaften ersten Kanal oder einen fehlerhaften zweiten Kanal zu schließen und die Kontrolle über den Aktuator dem als nicht fehlerhaft angesehenen Kanal zuzuweisen, vorzugsweise wobei die Auswahleinheit dazu ausgelegt ist, den als fehlerhaft angesehenen Kanal vom Motor zu isolieren.

Weiter kann auch erkannt werden, wenn der von beiden Kanälen genutzte gemeinsame Drehzahlsensor ein fehlerhaftes Signal abgibt.

Durch ein Isolieren des als fehlerhaft angesehenen Kanals vom Motor wird dafür gesorgt, dass der fehlerhaft agierende Kanal nicht mit einer Kontrolle des Motors betraut wird, da hierbei die Gefahr besteht, dass dieser eine nicht korrekte Umsetzung des Aktuators vollzieht.

Weitere Merkmale, Einzelheiten und Vorteile der Erfindung werden anhand der nachfolgenden Figurenbeschreibung ersichtlich. Dabei zeigt:

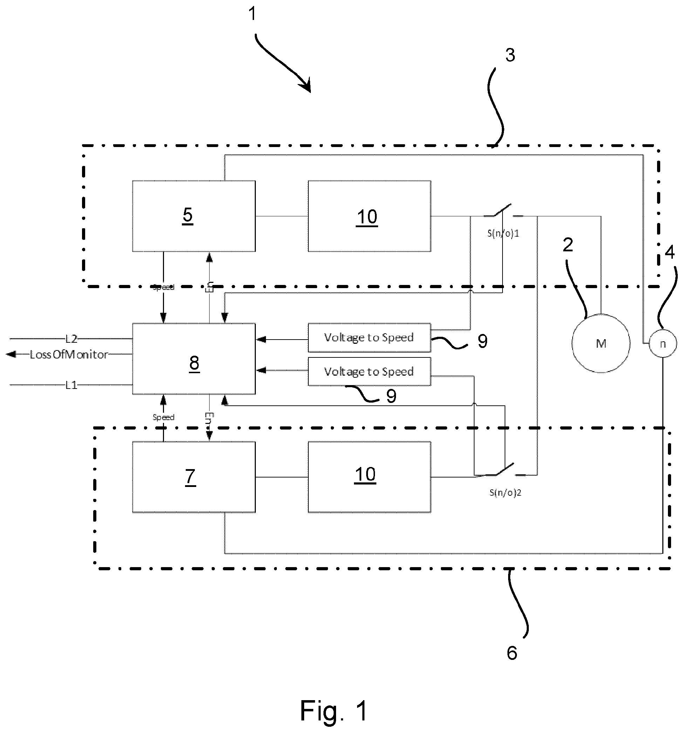

Fig. 1: eine schematische Darstellung eines erfindungsgemäßen Aktuators.

Fig. 1 zeigt eine schematische Darstellung des erfindungsgemäßen Aktuators 1 mit einem Motor 2 und einen die Drehzahl des Motors erfassenden Drehzahlsensor 4. Der Drehzahlsensor 4 gibt dabei jeweils ein Drehzahlsignal an eine erste Funktionseinheit 5 und eine zweite Funktionseinheit 7 ab. Die erste Funktionseinheit 5 ist dabei Teil eines ersten Kanals 3, der redundant zu einem zweiten Kanal 6 ausgebildet ist, in welchem die zweite Funktionseinheit 7 angeordnet ist.

Sowohl der erste Kanal 3 wie auch der zweite Kanal 6 besitzen eine entsprechende Leistungselektronik 10 zum Ansteuern des Motors 2.

Der erste Kanal 3 und der zweite Kanal 6 sind jeweils mit einer Auswahl einer 8 in Verbindung, die darüber entscheidet, welcher der beiden Kanäle 3, 6 die Kontrolle über den Aktuator 1 erhält. Der andere Kanal, der die Kontrolle über den Aktuator nicht besitzt, führt weiterhin dieselben Operationen wie der die Kontrolle ausführende Kanal aus und leitet die so erzeugten Informationen an die Auswahleinheit 8 weiter. In der Auswahleinheit findet ein permanenter Vergleich der durch den ersten Kanal 3 und den zweiten Kanal 6 erzeugten Informationen statt, sodass eine Entscheidung darüber getroffen werden kann, ob eine Abweichung zwischen dem ersten Kanal und den zweiten Kanal vorliegt. Ist dies der Fall, so besitzt die Auswahleinheit 8 nun darüber Kenntnis, dass einer der beiden Kanäle fehlerhaft ist.

Darüber hinaus ist eine Motorinformationseinheit 9 zu erkennen, die aufgrund einer vom Motor 2 abgeleiteten Information der Auswahleinheit 8 bspw. ebenfalls einen Drehzahlinformationswert (dann den insgesamt dritten Drehzahlinformationswert) zur Verfügung stellt.

Hierdurch wird die Auswahleinheit 8 in die Lage versetzt, nicht nur über einen Fehlerzustand eines der beiden Kanäle 3, 6 in Kenntnis gesetzt zu werden, sondern es kann mithilfe einer Mehrheitsentscheidung der insgesamt drei an die Auswahleinheit 8 übermittelten Drehzahlinformationswerte ein als fehlerhaft agierend angesehener Kanal 3, 6 identifiziert werden.

Ein erster Fehler (Fehler 1) kann dabei bspw. dadurch errechnet werden, dass eine Differenz zwischen dem Signal (Speed L1) des ersten Kanals 3 und dem Signal (Speed U) der Motorinformationseinheit 9 ermittelt wird, wohingegen ein zweiter Fehler (Fehler 2) durch eine Differenz zwischen dem Signal (Speed L2) des zweiten Kanals 6 und dem Signal (Speed U) der Motorinformationseinheit 9 ermittelt wird.

Darüber hinaus kann in der Auswahleinheit 8 überprüft werden, ob der erste Kanal und der zweite Kanal voneinander abweichende Signale an die Auswahleinheit 8 übermitteln (vgl. Ungleichheit).

In der nachfolgenden Tabelle sind dabei die unterschiedlichen Fälle zusammengefasst, wobei in einem ersten Fall der erste Kanal die Steuerung über den Aktuator besitzt (in CMD) und in einem zweiten Fall der zweite Kanal die Steuerung über den Aktuator besitzt. Der jeweils andere Kanal ist dabei in einem Überwachungszustand (in MON) und liefert keine Steuersignale an den Motor 2.

Um ein Liefern von Signalen an den Motor 2 zu unterbinden, können entsprechende Schalter S(n/o)1, S(n/o)2 vorgesehen sein, die die Motorelektronik von der Leistungselektronik 10 des ersten Kanals 3 oder des zweiten Kanals 6 trennen.

Nachfolgend ist eine Tabelle der möglichen oben beschriebenen Fälle aufgeführt, wobei ein Fehler in dem mit der Steuerung des Motors betrauten Kanal dazu führt, dass die Kontrolle zu dem anderen, vormals im Überwachungszustand befindlichen Kanal gewechselt wird. Ein Fehler in dem Kanal, der für die Überwachung genutzt wird, führt nicht zu einem Wechsel, ebenso wenig wie ein in dem Drehzahlsensor 4 detektierter Fehler.

| Fall | Zustand 1.Kanal 3 | Fehler1 Speed L1 - Speed U | Fehler2 Speed L2 - Speed U | Ungleichheit Speed L1 - Speed L2 | Zustand 2.Kanal 6 |
|---|---|---|---|---|---|
| Fehler des 1.Kanals 3 | **IN CMD** | Err 1 NOK | Err 2 OK | NOK | IN MON |
| Fehler des 2.Kanals 6 | **IN CMD** | Err 1 OK | Err 2 NOK | NOK | IN MON |
| Fehler der Motorinformationseinheit 9 | **IN CMD** | Err1 NOK | Err2 NOK | OK | IN MON |
| Fehler des 1.Kanals 3 | IN MON | Err 1 OK | Err 2 NOK | NOK | **IN CMD** |
| Fehler des 2.Kanals 6 | IN MON | Err 1 NOK | Err 2 OK | NOK | **IN CMD** |
| Fehler der Motorinformationseinheit 9 | IN MON | Err1 NOK | Err2 NOK | OK | **IN CMD** |

Man erkennt, dass für das Wechseln der Kontrolle von dem ersten Kanal zu dem zweiten Kanal oder umgekehrt von den insgesamt drei durchgeführten vergleichen zwei darauf hinweisen müssen, dass ein Kanal als fehlerhaft anzusehen ist. Nur dann wird die Kontrolle einem Kanal entzogen und auf den vormals zur Überwachung genutzten Kanal übertragen. Wird hingegen festgestellt, dass der zu Überwachung genutzte Kanal fehlerhaft ist, erfolgt natürlich kein Kontrollwechsel. Ebenso wenig erfolgt ein Kontrollwechsel, wenn die Vergleiche darauf hindeuten, dass der Drehzahlsensor 4, welcher die Drehzahlsignale an die jeweiligen Kanäle liefert, als fehlerhaft identifiziert wird.

Weiter vorteilhaft ist, dass die Auswahleinheit vollständig durch das Anlegen einer Ausgangsspannung im isolierten Zustand überprüfbar ist, was die Funktionsfähigkeit bestätigen kann.

Von der Erfindung ist auch die Möglichkeit umfasst, dass anstatt der Drehzahl des Motors die Motorposition verglichen wird, was auch dazu führt, dass Motorfehler oder ein Fehler des gemeinsamen Sensors, welche die Motorposition an beide Kanäle liefert, erkennbar sind. Dabei kann vorgesehen sein, dass die Auswahleinheit um eine Strommessung erweitert wird. Zudem kann auf eine vollständige sensorlose Positionserfassung zurückgegriffen werden, die die Notwendigkeit von kostenintensiver Hardware weiter verringert.

Der Verlust der Motor Auswerteeinheit 9 kann dem übergeordneten System gemeldet werden. Dazu können die Funktionseinheiten 5 und 7 vorteilhafterweise auch eine Kommunikationseinheit aufweisen, die die Meldung an das übergeordnete System sendet.

**Bezugszeichenliste**

1 Aktuator
2 Motor
3 erster Kanal
4 gemeinsamer Sensor, bspw. Drehzahlsensor
5 Funktionseinheit des ersten Kanals
6 zweiter Kanal

7       Funktionseinheit des zweiten Kanals
8       Auswahleinheit
9       Motorinformationseinheit
10      Leistungselektronik

**Patentansprüche**

1.  Aktuator (1) mit redundanten Kanälen, umfassend:

    einen Motor (2) zum Betätigen des Aktuators (1),
    einen Sensor (4), insbesondere einen Drehzahlsensor, zum Erfassen und Weitergeben eines Drehzahlsignals des Motors (2),
    einen ersten Kanal (3), der eine mit dem Sensor (4) verbundene erste Funktionseinheit (5) zum Betreiben des Aktuators (1) aufweist,
    einen zum ersten Kanal (3) redundanten zweiten Kanal (6), der eine mit dem Sensor (4) verbundene zweite Funktionseinheit (7) zum Betreiben des Aktuators (1) aufweist, und
    eine Auswahleinheit (8) zum Auswählen, ob der erste Kanal (3) oder der zweite Kanal (6) die Kontrolle über den Aktuator (1) erhält, wobei
    der erste Kanal erste Kanal (3) einen auf dem Drehzahlsignal basierenden ersten Drehzahlinformationswert und der zweite Kanal (6) einen auf dem Drehzahlsignal basierenden zweiten Drehzahlinformationswert an die Auswahleinheit (8) liefert,
    **gekennzeichnet durch**
    eine Motorinformationseinheit (9) zum Bereitstellen eines Motorinformationswerts, insbesondere eines dritten Drehzahlinformationswerts des Motors (2), an die Auswahleinheit (8), wobei
    die Auswahleinheit (8) dazu ausgelegt ist, auf Grundlage des Motorinformationswerts sowie des ersten und des zweiten Drehzahlinformationswerts eine Entscheidung zu treffen, ob der erste Kanal (3) oder der zweite Kanal (6) die Kontrolle über den Aktuator (1) erhält.

2.  Aktuator (1) nach dem vorhergehenden Anspruch 1, wobei die erste Funktionseinheit (5) und die zweite Funktionseinheit (7) jeweils dazu ausgelegt sind, aus dem Drehzahlsignal des Sensors die Drehzahlinformation zu bestimmen und/oder jeweils eine Kommunikationseinheit umfassen, um mit einer übergeordneten Steuereinheit kommunizieren zu können.

3.  Aktuator (1) nach einem der vorhergehenden Ansprüche, wobei der erste Drehzahlinformationswert und der zweite Drehzahlinformationswert des Motors (2) eine Drehzahl des Motors (2), insbesondere eine Solldrehzahl und/oder eine Istdrehzahl des Motors (2), ist.

4.  Aktuator (1) nach einem der vorhergehenden Ansprüche, wobei der Motorinformationswert der Motorinformationseinheit (9) eine Drehzahl des Motors (2), insbesondere eine Solldrehzahl und/oder eine Istdrehzahl des Motors (2), oder die Motorposition des Motors (2) ist.

5.  Aktuator (1) nach einem der vorhergehenden Ansprüche, wobei der Sensor (4) in einfacher Ausführung, also simplex, vorgesehen ist und das Drehzahlsignal an den ersten Kanal (3) und den zweiten Kanal (6) liefert.

6.  Aktuator (1) nach einem der vorhergehenden Ansprüche, wobei der Motor (2) ein Gleichstrommotor, insbesondere ein bürstenloser Gleichstrommotor ist.

7.  Aktuator (1) nach einem der vorhergehenden Ansprüche, wobei die Auswahleinheit (8) dazu ausgelegt ist, einen der beiden Kanäle auszuwählen, um den Motor (2) anzusteuern, und den anderen der beiden Kanäle zu nutzen, um ein Ansteuern des Motors (2) durch den ersten Kanal (3) zu überwachen.

8.  Aktuator (1) nach einem der vorhergehenden Ansprüche, wobei die Auswahleinheit (8) nicht durch einen FPGA oder einen Mikrocontroller, sondern nur durch Logikbausteine und/oder entsprechende einfache Hardware umgesetzt ist.

9.  Aktuator (1) nach einem der vorhergehenden Ansprüche, wobei die Motorinformationseinheit (9) dazu ausgelegt ist, über eine Motorspannung, insbesondere eine Spannung an einem Ausgang einer Endstufe des Motors (2), und/oder einen Motorstrom einen dritten Drehzahlinformationswert des Motors (2) zu bestimmen.

10. Aktuator (1) nach dem vorhergehenden Anspruch 9, wobei die Motorinformationseinheit (9) eine Konvertereinheit zum Umwandeln einer Motorspannung in den dritten Drehzahlinformationswert des Motors (2) ist.

11. Aktuator (1) nach einem der vorhergehenden Ansprüche 9-10, wobei die Motorinformationseinheit (9) dazu ausgelegt ist, einen dritten Drehzahlinformationswert über eine offene Phasenwindung des Motors (2), insbesondere eines bürstenlosen Gleichstrommotors, zu bestimmen.

12. Aktuator (1) nach einem der vorhergehenden Ansprüche 9-11, wobei die Motorinformationseinheit (9) dazu ausgelegt ist, den dritten Drehzahlinformationswert mittels einer in den Motor (2) eingelegten Hilfswicklung zu bestimmen.

13. Aktuator (1) nach einem der vorhergehenden Ansprüche 9-12, wobei die Motorinformationseinheit (9) dazu ausgelegt ist, durch einen weiteren an den Motor (2) angebrachten Sensor (4,), insbesondere einen Drehzahlsensor, den dritten Drehzahlinformationswert zu bestimmen.

14. Aktuator (1) nach einem der vorhergehenden Ansprüche, wobei

die Motorinformationseinheit (9) dazu ausgelegt ist, eine Motorposition des Motors (2) an die Auswahleinheit (8) zu liefern, und
die Auswahleinheit (8) dazu ausgelegt ist, auf Grundlage der erhaltenen Motorposition, einen Fehler in dem Sensor (4), der das Drehzahlsignal sowohl an den ersten Kanal (3) als auch an den zweiten Kanal (6) gibt, zu erkennen.

15. Aktuator (1) nach einem der vorhergehenden Ansprüche, wobei die Auswahleinheit (8) dazu ausgelegt ist, den Motorinformationswert sowie den ersten und den zweiten Drehzahlinformationswert untereinander zu vergleichen und in Abhängigkeit davon auf einen fehlerhaften ersten Kanal (3) oder einen fehlerhaften zweiten Kanal (6) zu schließen und die Kontrolle über den Aktuator (1) dem als nicht fehlerhaft angesehenen Kanal (3, 6) zuzuweisen, vorzugsweise wobei die Auswahleinheit (8) dazu ausgelegt ist, den als fehlerhaft angesehenen Kanal (6, 3) vom Motor (2) zu isolieren.

Fig. 1

Europäisches Patentamt
European Patent Office
Office européen des brevets

# EUROPÄISCHER RECHERCHENBERICHT

Nummer der Anmeldung

EP 25 18 7708

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2020/231047 A1 (DEMONT SÉBASTIEN [CH]) 23. Juli 2020 (2020-07-23) * das ganze Dokument * ----- | 1-15 | INV. G05D1/87 G05D1/85 G05B9/03 |
| A | EP 0 093 276 A2 (GEN ELECTRIC [US]) 9. November 1983 (1983-11-09) * das ganze Dokument * ----- | 1-15 | H02P7/00 |
| A | US 2018/043928 A1 (FUJITA YUJI [JP] ET AL) 15. Februar 2018 (2018-02-15) * das ganze Dokument * ----- | 1-15 | |
| A | US 2014/200687 A1 (STEGMAIER SIMON [DE] ET AL) 17. Juli 2014 (2014-07-17) * das ganze Dokument * ----- | 1-15 | |
| A | DE 195 24 992 C1 (MTU MUENCHEN GMBH [DE]) 8. August 1996 (1996-08-08) * das ganze Dokument * ----- | 1-15 | |
| A | US 5 428 285 A (KOYAMA MASATO [JP] ET AL) 27. Juni 1995 (1995-06-27) * das ganze Dokument * ----- | 1-15 | RECHERCHIERTE SACHGEBIETE (IPC) G05D G05B H02P |

Der vorliegende Recherchenbericht wurde für alle Patentansprüche erstellt

| Recherchenort | Abschlußdatum der Recherche | Prüfer |
|---|---|---|
| München | 22. Oktober 2025 | Pöllmann, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 18 7708

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-10-2025

| Im Recherchenbericht angeführtes Patentdokument | Datum der Veröffentlichung | Mitglied(er) der Patentfamilie | Datum der Veröffentlichung |
|---|---|---|---|
| US 2020231047 A1 | 23-07-2020 | CH 715770 A1 | 31-07-2020 |
| | | US 2020231047 A1 | 23-07-2020 |
| | | WO 2020152613 A1 | 30-07-2020 |
| EP 0093276 A2 | 09-11-1983 | EP 0093276 A2 | 09-11-1983 |
| | | ES 8404009 A1 | 01-04-1984 |
| | | KR 840004474 A | 15-10-1984 |
| | | MX 155415 A | 29-02-1988 |
| US 2018043928 A1 | 15-02-2018 | CN 107733316 A | 23-02-2018 |
| | | EP 3281844 A1 | 14-02-2018 |
| | | JP 6801287 B2 | 16-12-2020 |
| | | JP 2018024335 A | 15-02-2018 |
| | | US 2018043928 A1 | 15-02-2018 |
| US 2014200687 A1 | 17-07-2014 | CN 103703423 A | 02-04-2014 |
| | | DE 102011102274 A1 | 29-11-2012 |
| | | EP 2715462 A2 | 09-04-2014 |
| | | HK 1195138 A1 | 31-10-2014 |
| | | JP 5981988 B2 | 31-08-2016 |
| | | JP 2014515509 A | 30-06-2014 |
| | | US 2014200687 A1 | 17-07-2014 |
| | | WO 2012159850 A2 | 29-11-2012 |
| DE 19524992 C1 | 08-08-1996 | DE 19524992 C1 | 08-08-1996 |
| | | FR 2736387 A1 | 10-01-1997 |
| | | GB 2303225 A | 12-02-1997 |
| US 5428285 A | 27-06-1995 | DE 4318923 A1 | 02-12-1993 |
| | | DE 4345505 B4 | 26-01-2012 |
| | | GB 2267361 A | 01-12-1993 |
| | | JP 3084928 B2 | 04-09-2000 |
| | | JP H0630578 A | 04-02-1994 |
| | | US 5428285 A | 27-06-1995 |

EPO FORM P0461

Für nähere Einzelheiten zu diesem Anhang : siehe Amtsblatt des Europäischen Patentamts, Nr.12/82